# EUROPÄISCHE PATENTSCHRIFT

(11) **EP 3 789 631 B1**
(45) Veröffentlichungstag und Bekanntmachung des Hinweises auf die Patenterteilung: **12.10.2022**
(21) Anmeldenummer: 20190277.2
(22) Anmeldetag: 10.08.2020
(51) Int. Cl.: F16F 15/14

(54) **FLIEHKRAFTPENDEL MIT FEDERBREMSELEMENT UND ENTSPRECHENDES SCHWUNGRAD**
CENTRIFUGAL PENDULUM WITH SPRING-LOADED BRAKE ELEMENT AND FLYWHEEL
BALANCIER À FORCE CENTRIFUGE POURVU D'ÉLÉMENT DE FREINAGE À RESSORT ET VOLANT D'INERTIE CORRESPONDANT

(30) Priorität: 27.08.2019 DE 102019122951
(43) Veröffentlichungstag der Anmeldung: 10.03.2021
(73) Patentinhaber: Schaeffler Technologies AG & Co. KG, 91074 Herzogenaurach (DE)
(72) Erfinder: Ahnert, Gerd, 77880 Sasbach (DE)

(56) Entgegenhaltungen:
- WO-A1-2018/161992
- DE-A1-102012 221 956
- DE-A1-102016 223 906

## Beschreibung

Die vorliegende Erfindung betrifft ein Fliehkraftpendel mit einem Federbremselement zum Abbremsen der entsprechenden Pendelmassen, insbesondere für einen Antriebsstrang, und ein Schwungrad mit einem entsprechenden Fliehkraftpendel.

Zur Dämpfung oder Tilgung von Torsionsschwingungen im Antriebsstrang sind Fliehkraftpendel mit Rollenlagerungen der Pendelmassen in verschiedenen Bauformen / bekannt, bei denen die Pendelmassen auf Rollen geführt sind, die sich in Bewegungsbahnen bewegen können, die in einem oder mehreren Pendelflanschen vorgesehen sind. Durch die Formgebung der Rollen ist es möglich, den Pendelmassen eine Bewegungsmöglichkeit vorzugeben, die vorteilhaft für eine große Tilgungswirkung ist.

Bei der Auswahl optimaler Rollenbahnformen zur Vorgabe der Pendelbewegung ist zu berücksichtigen, dass hauptsächlich eine große Tilgungswirkung erzielt werden soll, aber gleichzeitig auch vorteilhafte Kontaktkraftverhältnisse angestrebt werden. Weiterhin soll auch ein intensives Anschlagen (Stöße) an den Bahnenden vermeiden werden, um so Bauteilschädigungen oder auch nur störende Geräusche zu vermeiden.

Da sich die Schwingungsanregungen u.a. über einen großen Drehzahl- / Frequenzbereich erstrecken, tritt hier ein erheblicher Konflikt / Schwierigkeit für die Auslegung auf.

Eine bekannte Lösung für dieses Problem sind bspw. abschnittsweise angepasste Bewegungsbahnbereiche. Eine spezielle Lösung verwendet zusätzliche Reib- bzw. Bremseinrichtungen. Diese bewirken ihren Bremseffekt auf die Pendelbewegungen so, dass eine ausreichende Tilgung erreicht wird und aber gleichzeitig keine massiv störenden Effekte (Stöße, erhöhter Rollenverschleiß o.a.) auftreten. Eine solche Lösung ist aus der WO 2018/161992 A1 bekannt. Hierbei sind ein oder zwei Federelemente zwischen einer Pendelmasse und einem Pendelflansch ausgebildet. Aufgrund der Positionierung zwischen Pendelmasse und Pendelflansch bedingt der Einsatz des oder der Federelemente eine Vergrößerung des für das Fliehkraftpendel notwendigen Bauraums in axialer Richtung.

Hiervon ausgehend liegt der vorliegenden Erfindung die Aufgabe zugrunde, die aus dem Stand der Technik bekannten Probleme zumindest teilweise zu überwinden.

Diese Aufgabe wird gelöst mit den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Fliehkraftpendel zur Dämpfung von Torsionsschwingungen, insbesondere für ein Schwungrad, umfassend einen mit einem Antriebsstrangelement des Antriebsstrangs, insbesondere dem Schwungrad, drehfest verbindbaren um eine Drehachse drehbaren Pendelflansch und mindestens eine Pendelmasse, die begrenzt gegenüber dem Pendelflansch beweglich ist, wobei das Fliehkraftpendel mindestens ein Federbremselement zum Abbremsen und Dämpfen der Bewegungen der Pendelmasse gegenüber dem Pendelflansch aufweist, zeichnet sich dadurch aus, dass das Federbremselement mindestens eine Biegefeder aus Blech aufweist, welche in Richtung der Drehachse außen an der Pendelmasse anliegt, über mindestens ein Befestigungselement am Pendelflansch festgelegt ist und welches bei der Montage mit oder am Antriebsstrangelement unter Erhöhung der Spannung der Biegefeder am Antriebsstrangelement abgestützt wird.

Das Fliehkraftpendel tilgt beziehungsweise dämpft Torsionsschwingungen einer bestimmten Resonanzfrequenz, in dem die Pendelmassen sich auf vorbestimmten Bahnen gegenüber dem Pendelflansch gegen die Wirkung einer Federeinrichtung bewegen können. Unter einem Antriebsstrang, insbesondere eines Kraftfahrzeugs, werden alle Komponenten verstanden, die im Kraftfahrzeug die Leistung für den Antrieb generieren und bis auf die Straße übertragen. Insbesondere umfasst der Antriebsstrang einen Verbrennungsmotor mit einem Schwungrad, mindestens eine Kupplung zur lösbaren Verbindung des Verbrennungsmotors mit einem Getriebe, Antriebswellen, Steckachsen und die Räder. Zusätzlich kann der Antriebsstrang noch mindestes einen Elektromotor aufweisen.

Das Federbremselement bewirkt insbesondere ein Abbremsen und/oder Dämpfen der Pendelmasse. Das Federbremselement wirkt las Feder- und/oder Hystereseeinrichtung zur Abbremsung und Dämpfung der Pendelmassenausschläge am Pendelflansch. Das Federbremselement wird am Pendelflansch vormontiert. Im vormontierten Zustand, also ohne, dass das Fliehkraftpendel an dem Antriebsstrangelement, insbesondere dem Schwungrad, montiert ist, weist die Biegefeder höchstens eine erste (Feder-)Spannung auf, die bei der Montage am Antriebsstrangelement erhöht wird, so dass im montierten Zustand das Federbremselement eine Kraft auf die Pendelmasse ausübt. Das Federbremselement ist so ausgebildet, dass die Kraft in Richtung der Drehachse wirkt. Bei dem Federbremselement nach der vorliegenden Erfindung liegt also gerade kein Bremskörper aus einem elastomeren Material vorgeschlagen, vielmehr wird durch die Federkraft des Federbremselementes Reibung erzeugt, die eine verschleißarme Bremsung und Dämpfung der Bewegung der Pendelmasse gegenüber dem Pendelflansch ermöglicht. Insbesondere ist das Federbremselement so außen am Pendelflansch angebracht, dass es im montierten Zustand in Richtung des Antriebsstrangelements weist, so dass durch die Montage des Fliehkraftpendels eine Verformung des Federbremselementes erfolgen kann.

Um das Verspannen der Biegefeder bei der Montage auf möglichst einfache Art und Weise zu gewährleisten, ist es bevorzugt, dass das Federelement außerhalb des Pendelflansches und der Pendelmasse verläuft. Hierunter wird insbesondere verstanden, dass das Federelement nicht in Richtung der Drehachse zwischen Pendelmasse und Pendelflansch ausgebildet ist. Dies erlaubt eine Ausgestaltung, bei der das Federelement in Richtung der Drehachse außen am Fliehkraftpendel ausgebildet ist und so einfach beispielsweise durch eine entsprechende Aufnahme des Antriebsstrangelements gespannt wird. Hierzu ist es vorteilhaft, wenn die Ausdehnung des Federbremselementes im vormonierten Zustand, also vor Montage an dem Antriebsstrangelement, in Richtung der Drehachse zumindest geringfügig größer ist als der im oder am Antriebsstrangelement für die Montage zur Verfügung stehende Bauraum, da dann bei der Festlegung des Pendelflansches gegenüber dem Antriebsstrangelement eine Spannung des Federbremselementes erfolgt.

Dies ermöglicht eine einfache Montage bei gleichzeitiger Spannung des Federelements. So wird die Federkraft an dem Antriebsstrangelement abgestützt. Pendelflansch und insbesondere das Schwungrad sind drehfest miteinander verbunden, so dass die Federkraft indirekt am Pendelflansch abgestützt wird.

Bevorzugt ist das Federbremselement umfassend eine Tellerfeder ausgestaltet. Die Biegefeder ist also bevorzugt als Tellerfeder ausgestaltet und weist eine Mehrzahl von Federzungen auf, die im montierten Zustand an dem Antriebsstrangelement anliegen.

Bevorzugt ist die Tellerfeder mit mehreren Befestigungselementen am Pendelflansch festgelegt und in Umfangsrichtung zwischen den Befestigungselementen sind jeweils eine oder mehrere Federzungen ausgebildet.

Bevorzugt wird das Befestigungselement in eine Öffnung des Pendelflansches eingehakt. Dies erlaubt eine einfache Vormontage des Fliehkraftpendels.

Bevorzugt umfasst die Pendelmasse ein Pendelmassenelement und der Pendelmassenflansch aus zwei Pendelmassenflanschelementen ausgebildet ist, wobei in Richtung der Drehachse das Pendelmassenelement zwischen den Pendelmassenflanschelementen ausgebildet ist.

Alternativ umfasst die Pendelmasse zwei Pendelmassenelemente, wobei in Richtung der Drehachse der Pendelflansch zwischen den Pendelmassenelementen ausgebildet ist.

Bevorzugt weist die Pendelmasse zumindest in dem Bereich, in dem das Federbremselement anliegt, mindestens ein Gleitelement auf, auf welchem das Federbremselement aufliegt.

Die Gestaltung des Gleitelements, insbesondere im Hinblick auf das Material, aus dem das Gleitelement ausgebildet ist, und/oder die Oberflächenbeschaffenheit erlaubt eine Anpassung der Reibeigenschaften der Reibpaarung aus Federbremselement und Pendelmasse, so dass die Dämpfungseigenschaften an die gegebenen Anforderungen anpassbar sind.

Weiterhin wird ein Schwungrad vorgeschlagen, umfassend ein erfindungsgemäßes Fliehkraftpendel.

Bevorzugt ist das Fliehkraftpendel in einer Fliehkraftpendelaufnahme des Schwungrades montiert.

Bevorzugt umschließt die Fliehkraftpendelaufnahme das Fliehkraftpendel zumindest dreiseitig zumindest teilweise. Dies erlaubt eine bauraumsparende Ausgestaltung des Schwungrades mit Fliehkraftpendel.

Bevorzugt umfasst das Schwungrad einen Zahnkranz, insbesondere einen Starterzahnkranz.

Vorsorglich sei angemerkt, dass die hier verwendeten Zahlwörter ( erste, zweite, ) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Schnittansicht eines Ausschnitts eines Beispiels eines Fliehkraftpendels im vormontierten Zustand;
- Fig. 2:: eine Schnittansicht eines Ausschnitts des Beispiels eines Fliehkraftpendels im montierten Zustand;
- Fig. 3:: ein Beispiel eines Federbremselements des Fliehkraftpendels aus Fig. 1 und 2;
- Fig. 4:: ein Beispiel eines Schwungrades mit vormontiertem Fliehkraftpendel in einer Schnittansicht;
- Fig. 5:: das Beispiel eines Schwungrades mit montiertem Fliehkraftpendel in einer Schnittansicht.

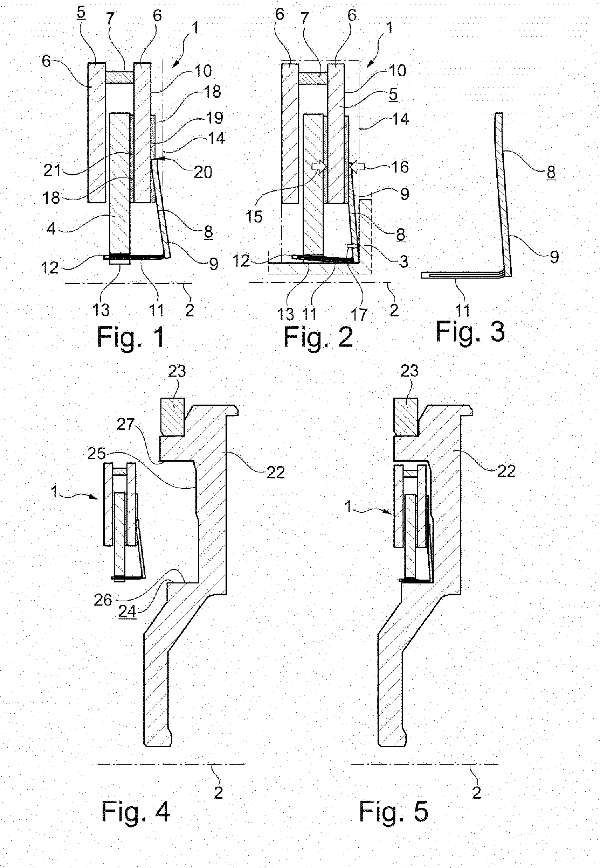

Fig. 1 und 2 zeigen eine Schnittansicht eines Ausschnitts eines Fliehkraftpendel 1 zur Dämpfung von Torsionsschwingungen in einem nicht gezeigten Antriebsstrang, insbesondere für ein Schwungrad im vormontierten Zustand (Fig. 1) und im an einem Antriebsstrangelement 3 montierten Zustand (Fig. 3). Das Fliehkraftpendel 1 umfasst einen mit einem Antriebsstrangelement 3 des Antriebsstrangs, insbesondere dem Schwungrad, drehfest verbindbaren um eine Drehachse 2 drehbaren Pendelflansch 4 und mindestens eine Pendelmasse 5, die begrenzt gegenüber dem Pendelflansch 4 beweglich ist. In diesem Beispiel umfasst die Pendelmasse 5 zwei Pendelmassenelemente 6, die durch ein oder mehrere Verbindungselemente 7, die sich in axialer Richtung, also in Richtung der Drehachse 2, erstrecken, umfasst, wobei in Richtung der Drehachse 2 der Pendelflansch 4 zwischen den Pendelmassenelementen 6 ausgebildet ist.

Das Fliehkraftpendel 1 umfasst mindestens ein Federbremselement 8 zum Abbremsen und Dämpfen der Bewegungen der Pendelmasse 5 gegenüber dem Pendelflansch 4 aufweist. Das Federbremselement 8 umfasst mindestens eine Biegefeder 9 aus Blech, insbesondere aus einem Stahl, bevorzugt aus einem Federstahl, welche in Richtung der Drehachse 2 außen an der Pendelmasse 5, mithin also an einer Stirnseite 10 der Pendelmasse 5 bzw. eines Pendelmassenelementes 6 anliegt und über mindestens ein Befestigungselement 11 am Pendelflansch 4 festgelegt ist und welches bei der Montage mit oder am Antriebsstrangelement 3 unter Erhöhung der Spannung der Biegefeder 9 am Antriebsstrangelement 3 abgestützt wird. Insbesondere wird das mindestens eine Befestigungselement 11 in eine Öffnung 12 des Pendelflansches 4 eingehakt. Bevorzugt ist das Federbremselement 8 und der Pendelflansch 4 so ausgestaltet, dass das Federbremselement 8 bzw. die Biegefeder 9 beim Vormontieren, also beim Festlegen des mindestens einen Befestigungselementes 11 am Pendelflansch 4 unter eine leichte Biegespannung gesetzt wird, die beim Montieren des Fliehkraftpendels 1 am Antriebsstrangelement 3 erhöht wird. Dies ergibt sich im vorliegenden Beispiel durch die Form der Biegefeder 9 und die Einbaulage 14 (vgl. Fig. 1 und 2 im Hinblick auf die Einbaulage 14). Nach Montage des Fliehkraftpendels 1 am Antriebsstrangelement 3 bewirken die Befestigungselemente 11 eine Verdrehsicherung des Federbremselementes 8 gegenüber dem Pendelflansch 4. Bei der Montage des Fliehkraftpendels 1 am Antriebsstrangelement 3 wird über ein Verbindungselement 13 eine drehfeste Verbindung zum Antriebstrangelement 3 erzeugt.

Die Biegefeder 9 ist insbesondere als Tellerfeder ausgebildet, die über mehrere Befestigungselemente 11 am Pendelflansch 4 festgelegt wird, bei der in Umfangsrichtung zwischen den Befestigungselementen 11 eine oder mehrere Federzungen ausgebildet sind. Alternativ kann das Federbremselement 8 bzw. die Biegefeder 9 als Wellscheibe ausgeführt werden.

Fig. 2 zeigt eine Situation im Betrieb, bei der auf die Pendelmasse 5 eine axiale Auslenkkraft 15 wirkt. Dieser wirkt eine Rückstellkraft 16 des Federbremselementes 8 entgegen, die über eine Abstützkraft 17 am Antriebsstrangelement 3 und damit indirekt am Pendelflansch 4 abgestützt. Durch die Reibung zwischen Federbremselement 8 und Pendelmasse 5 wird die Bewegung der Pendelmasse 5 gegenüber dem Pendelflansch 4 abgebremst, hierdurch kann die Bildung von Betriebsgeräuschen unterdrückt und Verschleiß verringert werden.

Die Pendelmasse 5 weist zwei Gleitelemente 18 auf. Mindestens ein erstes Gleitelement 19 ist dabei in dem Bereich 20 der Pendelmasse 5 ausgebildet, in dem das Federbremselement 8 anliegt, Das Federbremselement 8 liegt dabei auf dem ersten Gleitelement 19 auf. Weiterhin ist mindestens ein zweites Gleitelement 21 ausgebildet, welches zwischen dem Pendelmassenelement 6, an dessen Stirnseite 10 das Federbremselement 8 anliegt, und dem Pendelflansch 4 ausgebildet ist. Durch die Gleitelemente 18, 19, 21 kann durch Materialwahl und Oberflächengestaltung die Reibung zwischen Federbremselement 8 und Pendelmasse 5 einerseits und zwischen Pendelmassenelement 6 und Pendelflansch 4 andererseits einstellt werden, so dass eine möglichst effiziente Tilgung der Torsionsschwingungen bei möglichst effizienter Geräuschdämmung und Verschleißreduktion erfolgen kann.

Fig. 3 zeigt das Federbremselement 8 mit Biegefeder 9 und Befestigungselement 11 in einer seitlichen Ansicht.

Fig. 4 und 5 zeigen ein Schwungrad 22, welches Teil eines Antriebsstrangs insbesondere eines Kraftfahrzeugs ist. Fig. 4 zeigt eine Situation vor der Montage eines vormontierten Fliehkraftpendels 1, Fig. 5 nach der Montage des Fliehkraftpendels 1. Das Schwungrad 22 kann insbesondere Teil eines Drehschwingungsdämpfers sein. Das Schwungrad 22 weist einen Zahnkranz 23, insbesondere einen Starterzahnkranz, auf. Das Schwungrad 2 weist eine Fliehkraftpendelaufnahme 24 auf, in der das Fliehkraftpendel 1 montiert wird (Fig. 4) oder montiert ist (Fig. 5). Die Fliehkraftpendelaufnahme 24 weist eine erste axiale Fliehkraftaufnahmewand 25, eine zweite innere radiale Fliehkraftaufnahmewand 26 und eine dritte äußere radiale Fliehkraftaufnahmewand 27 auf. So kann das Fliehkraftpendel 1 bauraumsparend in das Schwungrad 2 integriert werden. Im Übrigen wird auf die Beschreibung zu den Figuren 1 bis 3 verwiesen, um Wiederholungen zu vermeiden.

Gemäß einem nicht dargestellten Ausführungsbeispiel ist es auch möglich, dass die Pendelmassenelemente in einer einzigen Radialebene zwischen zwei in axialer Richtung beabstandeten Pendelflanschen angeordnet sind, wobei das Federbremselement zum Abbremsen und Dämpfen der Bewegungen der Pendelmasse gegenüber den Pendelflanschen vorgesehen ist. Das Federbremselement umfasst mindestens eine Biegefeder aus Blech, insbesondere aus einem Stahl, bevorzugt aus einem Federstahl, welche in Richtung der Drehachse außen an der Pendelmasse, mithin also an einer Stirnseite der Pendelmasse bzw. eines Pendelmassenelementes anliegt, insbesondere in axialer Richtung zwischen einem der Pendelflansche und der Pendelmasse, und über mindestens ein Befestigungselement an einem der Pendelflansche festgelegt ist und welches bei der Montage mit oder am Antriebsstrangelement unter Erhöhung der Spannung der Biegefeder am Antriebsstrangelement abgestützt wird. Insbesondere wird das mindestens eine Befestigungselement in eine Öffnung des Pendelflansches eingehakt. Die Erhöhung der Spannung der Biegefeder kann beispielsweise durch entsprechende Durchgriffe im dem Antriebsstrangelement zugewandten Pendelflansch erfolgen, wobei die Biegefeder und/oder das Antriebsstrangelement mit Vorsprüngen ausgestattet ist/sind, die diese Durchgriffe beim Zusammenbau durchdringen, um mit dem Antriebsstrangelement bzw. der Biegefeder zur Vorspannung der Biegefeder in Anlage zu kommen.

### Bezugszeichenliste

- 1: Fliehkraftpendel
- 2: Drehachse
- 3: Antriebsstrangelement
- 4: Pendelflansch
- 5: Pendelmasse
- 6: Pendelmassenelement
- 7: Verbindungselement
- 8: Federbremselement
- 9: Biegefeder
- 10: Stirnseite
- 11: Befestigungselement
- 12: Öffnung
- 13: Verbindungselement
- 14: Einbaulage
- 15: Auslenkkraft
- 16: Rückstellkraft
- 17: Abstützkraft
- 18: Gleitelement
- 19: Erstes Gleitelement
- 20: Bereich
- 21: Zweites Gleitelement
- 22: Schwungrad
- 23: Zahnkranz
- 24: Fliehkraftpendelaufnahme
- 25: Erste Fliehkraftaufnahmewand
- 26: Zweite Fliehkraftaufnahmewand
- 27: Dritte Fliehkraftaufnahmewand

## Patentansprüche

1. Fliehkraftpendel (1) zur Dämpfung von Torsionsschwingungen, insbesondere für ein Schwungrad (22), umfassend einen mit einem Antriebsstrangelement (3) des Antriebsstrangs, insbesondere dem Schwungrad (22), drehfest verbindbaren um eine Drehachse (2) drehbaren Pendelflansch (4) und mindestens eine Pendelmasse (5), die begrenzt gegenüber dem Pendelflansch (4) beweglich ist, wobei das Fliehkraftpendel (1) mindestens ein Federbremselement (8) zum Abbremsen und Dämpfen der Bewegungen der Pendelmasse (5) gegenüber dem Pendelflansch (4) aufweist, wobei das Federbremselement (8) mindestens eine Biegefeder (9) aus Blech aufweist, welche in Richtung der Drehachse (3) außen an der Pendelmasse (5) anliegt, über mindestens ein Befestigungselement (11) am Pendelflansch (4) festgelegt ist und **dadurch gekennzeichnet, dass** das Federbremselement (8) bei der Montage mit oder am Antriebsstrangelement (3) unter Erhöhung der Spannung der Biegefeder (8) am Antriebsstrangelement (3) abgestützt wird.

2. Fliehkraftpendel (1) nach Anspruch 1, bei dem das Federbremselement (8) eine Tellerfeder umfasst.

3. Fliehkraftpendel (1) nach einem der vorhergehenden Ansprüche, bei dem das Befestigungselement (11) in eine Öffnung (12) des Pendelflansches (4) eingehakt wird.

4. Fliehkraftpendel (1) nach Anspruch 3, bei dem die Pendelmasse (5) ein Pendelmassenelement (6) umfasst und der Pendelmassenflansch (4) aus zwei Pendelmassenflanschelementen ausgebildet ist, wobei in Richtung der Drehachse (2) das Pendelmassenelement (6) zwischen den Pendelmassenflanschelementen ausgebildet ist.

5. Fliehkraftpendel (1) nach einem der Ansprüche 1 bis 3, bei dem die Pendelmasse (5) zwei Pendelmassenelemente (6) umfasst, wobei in Richtung der Drehachse (2) der Pendelflansch (4) zwischen den Pendelmassenelementen (6) ausgebildet ist.

6. Fliehkraftpendel (1) nach einem der vorhergehenden Ansprüche, bei dem die Pendelmasse (5) zumindest in dem Bereich (20), in dem das Federbremselement (8) anliegt, mindestens ein Gleitelement (18, 19) aufweist, auf welchem das Federbremselement (9) aufliegt.

7. Schwungrad (22), umfassend ein Fliehkraftpendel (1) nach einem der vorhergehenden Ansprüche.

8. Schwungrad (22) nach Anspruch 7, bei dem das Fliehkraftpendel (1) in einer Fliehkraftpendelaufnahme (24) des Schwungrades (22) montiert ist.

9. Schwungrad (22) nach Anspruch 8, bei dem die Fliehkraftpendelaufnahme (24) das Fliehkraftpendel (1) zumindest dreiseitig zumindest teilweise umschließt.

10. Schwungrad (22) nach einem der Ansprüche 7 bis 9, weiterhin umfassend einen Zahnkranz (23), insbesondere einen Starterzahnkranz.

## Claims

1. A centrifugal pendulum (1) for damping torsional vibrations, in particular for a flywheel (22), comprising a pendulum flange (4) which can be connected non-rotatably to a drivetrain element (3) of the drivetrain, in particular the flywheel (22) and which can be rotated about an axis of rotation (2), and at least one pendulum mass (5) which can be moved to a limited extent in relation to the pendulum flange (4), wherein the centrifugal pendulum (1) has at least one spring braking element (8) for braking and damping the movements of the pendulum mass (5) relative to the pendulum flange (4), wherein the spring braking element (8) has at least one flexible spring (9) made of sheet metal, which abuts on the outside of the pendulum mass (5) in the direction of the axis of rotation (3) and is fixed to the pendulum flange (4) via at least one fastening element (11) and **characterized in that** the spring braking element (8) is supported on the drivetrain element (3) during assembly with or on the drivetrain element (3) while increasing the tension of the flexible spring (8).

2. The centrifugal pendulum (1) according to Claim 1, in which the spring braking element (8) comprises a disc spring.

3. The centrifugal pendulum (1) according to one of the preceding claims, in which the fastening element (11) is hooked into an opening (12) of the pendulum flange (4).

4. The centrifugal pendulum (1) according to Claim 3, in which the pendulum mass (5) comprises a pendulum mass element (6) and the pendulum mass flange (4) is formed from two pendulum mass flange elements, wherein the pendulum mass element (6) is formed between the pendulum mass flange elements in the direction of the axis of rotation (2).

5. The centrifugal pendulum (1) according to one of Claims 1 to 3, in which the pendulum mass (5) comprises two pendulum mass elements (6), wherein the pendulum flange (4) is formed between the pendulum mass elements (6) in the direction of the axis of rotation (2).

6. The centrifugal pendulum (1) according to one of the preceding claims, in which the pendulum mass (5) has at least one sliding element (18, 19), at least in the region (20) in which the spring braking element (8) abuts, on which the spring braking element (9) abuts.

7. A flywheel (22) comprising a centrifugal pendulum (1) according to one of the preceding claims.

8. The flywheel (22) according to Claim 7, in which the centrifugal pendulum (1) is mounted in a centrifugal pendulum mount (24) of the flywheel (22).

9. The flywheel (22) according to Claim 8, in which the centrifugal pendulum mount (24) at least partially encloses the centrifugal pendulum (1) on at least three sides.

10. The flywheel (22) according to one of Claims 7 to 9, further comprising a ring gear (23), in particular a starter ring gear.

## Revendications

1. Balancier à force centrifuge (1) pour l'amortissement de vibrations de torsion, en particulier pour un volant d'inertie (22), comprenant une bride de balancier (4) pouvant être reliée solidaire en rotation avec un élément de chaîne cinématique (3) de la chaîne cinématique, en particulier le volant d'inertie (22), rotative autour d'un axe de rotation(2) et au moins une masse de balancier (5), qui est mobile de manière limitée par rapport à la bride de balancier (4), le balancier à force centrifuge (1) comportant au moins un élément de freinage à ressort (8) pour le freinage et l'amortissement des déplacements de la masse de balancier (5) par rapport à la bride de balancier (4), l'élément de freinage à ressort (8) comportant au moins un ressort de flexion (9) en tôle, qui repose dans la direction de l'axe de rotation (3) à l'extérieur sur la masse de balancier (5), est fixé à la bride de balancier (4) par le biais d'au moins un élément de fixation (11) et **caractérisé en ce que** l'élément de freinage à ressort (8), lors du montage avec ou sur l'élément de chaîne cinématique (3), est supporté en élevant la tension du ressort de flexion (8) sur l'élément de chaîne cinématique (3).

2. Balancier à force centrifuge (1) selon la revendication 1, dans lequel l'élément de freinage à ressort (8) comprend un ressort à disques.

3. Balancier à force centrifuge (1) selon l'une quelconque des revendications précédentes, dans lequel l'élément de fixation (11) est accroché dans une ouverture (12) de la bride de balancier (4).

4. Balancier à force centrifuge (1) selon la revendication 3, dans lequel la masse de balancier (5) comprend un élément (6) de masse de balancier et la bride de masse de balancier (4) est formée de deux éléments de bride de masse de balancier, en direction de l'axe de rotation (2), l'élément (6) de masse de balancier étant formé entre les éléments de bride de masse de balancier.

5. Balancier à force centrifuge (1) selon l'une quelconque des revendications 1 à 3, dans lequel la masse de balancier (5) comprend deux éléments (6) de masse de balancier, en direction de l'axe de rotation (2), la bride de balancier (4) étant formée entre les éléments (6) de masse de balancier.

6. Balancier à force centrifuge (1) selon l'une quelconque des revendications précédentes, dans lequel la masse de balancier (5) comporte, au moins dans la zone (20) dans laquelle l'élément de freinage à ressort (8) repose, au moins un élément coulissant (18, 19), sur lequel l'élément de freinage à ressort (9) repose.

7. Volant d'inertie (22), comprenant un balancier à force centrifuge (1) selon l'une quelconque des revendications précédentes.

8. Volant d'inertie (22) selon la revendication 7, dans lequel le balancier à force centrifuge (1) est monté dans une cavité de balancier à force centrifuge (24) du volant d'inertie (22).

9. Volant d'inertie (22) selon la revendication 8, dans lequel la cavité de balancier à force centrifuge (24) entoure le balancier à force centrifuge (1) au moins partiellement au moins sur trois côtés.

10. Volant d'inertie (22) selon l'une quelconque des revendications 7 à 9, comprenant en outre une couronne dentée (23), en particulier une couronne dentée de démarreur.
